# FASCICULE DE BREVET EUROPEEN

(11) **EP 3 983 655 B1**
(45) Date de publication et mention de la délivrance du brevet: **01.10.2025**
(21) Numéro de dépôt: 20728047.0
(22) Date de dépôt: 27.05.2020
(51) Int. Cl.: B64D 29/08, F01D 21/04

(54) **CARTER DE SOUFFLANTE DE TURBORÉACTEUR**
TURBINENFANGEHÄUSE
TURBINE FAN HOUSING

(30) Priorité: 12.06.2019 FR 1906245
(43) Date de publication de la demande: 20.04.2022
(73) Titulaire: SAFRAN AIRCRAFT ENGINES, 75015 Paris (FR)
(72) Inventeur: GLEMAREC, Guillaume, 75015 PARIS (FR); GARNAUD, Quentin Matthias Emmanuel, 75015 PARIS (FR); DAUTREPPE, Frédéric, 75015 PARIS (FR)
(74) Mandataire: Germain Maureau
(86) Numéro de dépôt international: PCT/EP2020/064762
(87) Numéro de publication internationale: WO 2020/249399

(56) Documents cités:
- EP-A2- 1 104 837
- FR-A1- 2 980 241
- FR-A1- 3 069 229
- US-A1- 2008 159 856
- US-A1- 2010 111 685

## Description

L'invention concerne un carter de soufflante, un turboréacteur d'aéronef comprenant un tel carter ainsi qu'une nacelle formée par un tel carter.

Une nacelle présente généralement une structure aérodynamique destinée à caréner un turboréacteur. La nacelle s'étend suivant un axe longitudinal et comprend une entrée d'air en amont du moteur, une section médiane abritant classiquement des moyens d'inversion de poussée, et est généralement terminée par une tuyère d'éjection dont la sortie est située en aval du turboréacteur.

Les termes moteur et turboréacteur désignent le même objet.

Un inverseur de poussée est un dispositif qui permet de diriger le flux d'air généré par le turboréacteur vers l'avant, il permet de raccourcir la distance d'atterrissage mais également de limiter la sollicitation des freins au niveau des atterrisseurs.

Les technologies les plus modernes utilisent des turboréacteurs double flux ; dans ces turboréacteurs, on vient générer par l'intermédiaire des aubes de la soufflante, à la fois un flux d'air chaud dit flux primaire, et un flux d'air froid dit flux secondaire.

Ce second flux dit d'air froid circule à l'extérieur du turboréacteur à travers un passage annulaire appelé veine, cette veine étant formée entre un carénage du turboréacteur et la paroi interne de la nacelle.

La structure médiane comporte usuellement un ou plusieurs capots de soufflante entourant un carter de soufflante du turboréacteur.

Le carter de soufflante présente une forme généralement cylindrique.

La soufflante du turboréacteur consiste essentiellement en un aubage rotatif comprenant une pluralité d'aubes de soufflante, monté rotatif par rapport à un moyeu fixe relié au carter de soufflante par une pluralité de bras fixes.

La surface intérieure du carter de soufflante est tapissée d'une surface abradable permettant d'assurer une étanchéité au regard des aubes de soufflante.

En aval de la soufflante se trouvent des aubes de redressement de flux, appelées aussi OGV (« Outlet Guide Vanes »), permettant de redresser le flux secondaire engendré par la soufflante.

Ce type de dispositif présente plusieurs inconvénients. En effet, le carter de soufflante possède de par sa nature structurante un poids important. De plus, l'intégration d'un tel carter de soufflante dans la nacelle présente des difficultés.

Une solution connue selon le brevet FR 2 961 483 consiste à utiliser un carter de soufflante présentant une forme de caisson, dont la paroi interne est apte à former la peau interne de la veine d'air froid d'une nacelle à l'intérieur de laquelle ledit turboréacteur est destiné à être monté, et dont la paroi externe est apte à former la peau externe de ladite nacelle. Un autre solution est divulguée dans la demande US 2010/111685.

Un tel carter de soufflante n'est pas agencé de manière optimale. En effet, la structure de caisson formant l'épaisseur de la nacelle ne permet pas de profiter de l'espace pouvant être renfermé par ce caisson et un certain volume interne est perdu.

De plus, les aéronefs d'aujourd'hui ont le besoin d'augmenter les surfaces ou volumes de panneaux acoustiques afin de limiter les nuisances sonores engendrées par l'ensemble propulsif formé par le turboréacteur et sa nacelle, tout en gardant la capacité structurale du carter de soufflante. Cependant, cette structure en caisson ne permet pas d'augmenter la surface des panneaux acoustiques par la délimitation du carter de soufflante en forme de caisson.

Enfin, un tel carter de soufflante présente un poids toujours important, ainsi qu'un nombre important de pièces le composant.

La présente invention vise à remédier à au moins un des inconvénients cités précédemment.

A cet effet, l'invention a pour objet un carter de soufflante à double flux, caractérisé en ce qu'il comprend une unique paroi formant au moins une partie d'une peau externe d'une nacelle, ladite paroi comprenant au moins un renfort de rigidification du carter de soufflante, au moins un dit renfort étant constitué par une partie de la paroi formant au moins une zone annulaire faisant saillie vers l'intérieur de la nacelle, ledit renfort étant en outre configuré pour la fixation du carter de soufflante à des bras traversant une veine de flux secondaire du turboréacteur.

Un tel carter de soufflante présentant une unique paroi pour former au moins une partie de la peau externe de la nacelle réduit le poids de l'ensemble formé par le carter de soufflante, et les autres éléments de la nacelle, et à fortiori le poids de l'ensemble propulsif. En outre, du fait que le carter de soufflante cumule la fonction structurale d'un carter de soufflante classique avec la fonction aérodynamique d'une nacelle classique, en particulier concernant la peau externe aérodynamique, le nombre de pièces constituant la nacelle intégrant ce carter de soufflante est diminué. De plus, l'unique paroi du carter de soufflante étant confondue avec la peau externe de la nacelle, le volume intérieur du carter de soufflante en est augmenté.

Enfin, l'au moins un renfort permet au carter de soufflante de réaliser sa fonction de fixation à des bras structuraux liés à d'autres parties du moteur, notamment à un moyeu fixe, tout en assurant sa fonction structurante.

Notamment, l'au moins un renfort s' étend annulairement et présente un profil en section longitudinale sensiblement similaire à un W ou à un U.

Ces formes permettent au carter de soufflante de recevoir les éléments à fixer au carter de soufflante aux endroits voulus.

De plus, ces différentes formes apportent de la raideur au carter de soufflante. Notamment encore, un renfort présentant un profil en section longitudinale en forme de U est destiné à entourer la soufflante.

Notamment encore, un renfort configuré pour la fixation du carter de soufflante à des bras présente un profil en section longitudinale en forme de W.

Selon un mode de réalisation, l'au moins un renfort forme au moins une cavité correspondante débouchant sur ladite peau externe.

L'au moins une cavité permet d'optimiser l'agencement du carter de soufflante, par exemple en comblant l'au moins une cavité par au moins un équipement de l'ensemble propulsif.

Selon un autre mode de réalisation, l'au moins une cavité est configurée pour être recouverte par un capot, un panneau ou une trappe de fermeture.

Le capot, le panneau ou la trappe de fermeture permet de reconstituer un aérodynamisme sur le carter de soufflante de la nacelle, en recouvrant l'au moins une cavité.

Selon un autre mode de réalisation encore, le capot, le panneau ou la trappe de fermeture, est amovible.

L'amovibilité du capot, du panneau ou de la trappe de fermeture, permet de passer aisément d'une position où le capot, le panneau ou la trappe de fermeture ne recouvre pas la cavité, permettant un accès à l'au moins une cavité à une position où le capot, le panneau ou la trappe de fermeture recouvre l'au moins une cavité, permettant de reconstituer une ligne aérodynamique au niveau de la cavité.

Selon un autre mode de réalisation encore, l'au moins une cavité est configurée pour recevoir au moins un équipement de l'ensemble propulsif.

L'invention concerne également un turboréacteur d'aéronef, comprenant un carter de soufflante présentant au moins une caractéristique précédemment présentée.

Avantageusement, les bras traversant la veine de flux secondaire du turboréacteur et auxquels ledit renfort du carter de soufflante est fixé comprennent des aubes de redressement de flux.

L'invention concerne également une nacelle comprenant un carter de soufflante selon l'invention.

Avantageusement, cette nacelle comporte des panneaux acoustiques supportés par des surfaces internes de ladite unique paroi du carter de soufflante, lesdits panneaux acoustiques formant au moins une partie d'une peau interne de la nacelle qui délimite extérieurement la veine de flux secondaire du turboréacteur.

On comprendra que le carter de soufflante forme au moins une partie de la peau externe de la nacelle et de la paroi du turboréacteur.

L'invention sera décrite plus en détail à travers les différentes figures présentées ci-dessous, ce qui facilitera sa compréhension.
[Fig. 1] est une vue partiellement en transparence d'un ensemble propulsif fixé à une aile d'un aéronef de l'art antérieur.
[Fig. 2] est une vue partielle en perspective d'aubes d'une soufflante et d'aubes de redressement de flux entourées par un carter de soufflante de l'art antérieur.
[Fig. 3] est une vue partielle en coupe selon un plan longitudinal d'une nacelle intégrant un carter de soufflante selon l'invention.
[Fig. 4] est une vue partielle en coupe selon un plan longitudinal d'une nacelle intégrant un carter de soufflante selon une autre variante de l'invention.

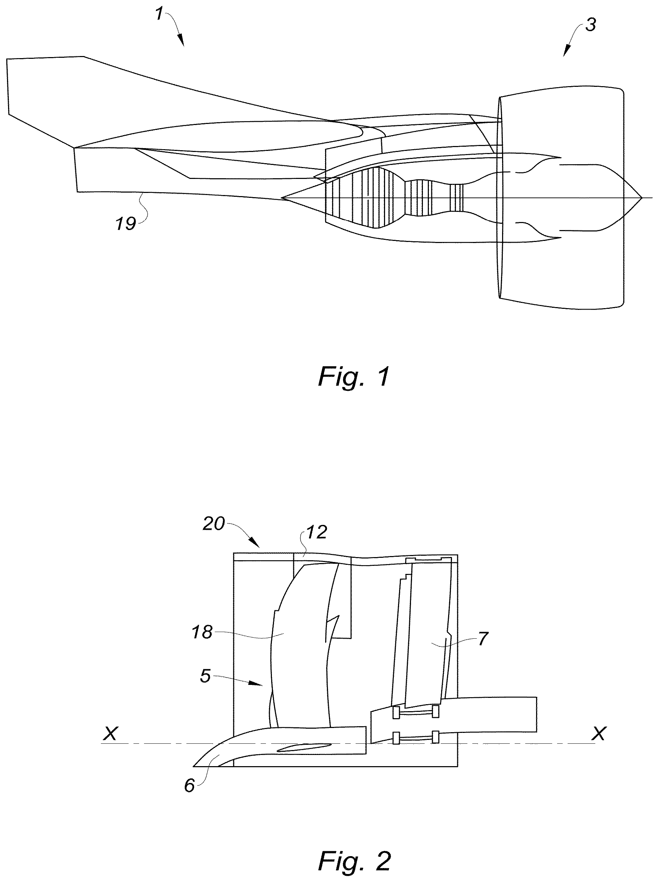

La figure 1 montre une aile 1 supportant un ensemble propulsif comprenant une nacelle 3, cette nacelle 3 entourant notamment un carter de soufflante.

Un mât 19, également appelé pylône, présente une extrémité fixée sous l'aile 1, et une extrémité opposée destinée à supporter l'ensemble propulsif.

La figure 2 montre en détail une partie d'un turboréacteur comprenant une soufflante 5 et des bras structurants qui peuvent être formés par des aubes de redressement de flux 7 entourées par le carter de soufflante 20. Sur cette figure, des aubes 18 de la soufflante 5, sont fixées à un moyeu 6 rotatif. Cette soufflante 5 permet la génération des flux primaire et secondaire. Le moyeu 6 est configuré pour être rotatif selon un axe longitudinal XX. Un revêtement abradable 12 tapisse la surface intérieure du carter de soufflante 20 au droit des aubes de soufflante 18 de manière à rendre étanche le carter de soufflante 20 mais également à prévenir les usures de la soufflante 5 en cas de contact entre les aubes de soufflante 18 et le carter de soufflante 20.

Les aubes de redressement de flux 7 permettent de redresser le flux secondaire engendré par la soufflante 5.

Au moins un certain nombre de ces aubes de redressement de flux 7 peut avoir une rigidité suffisante pour assurer une fonction structurante dans la liaison entre le carter de soufflante et d'autres parties du moteur, notamment un moyeu fixe.

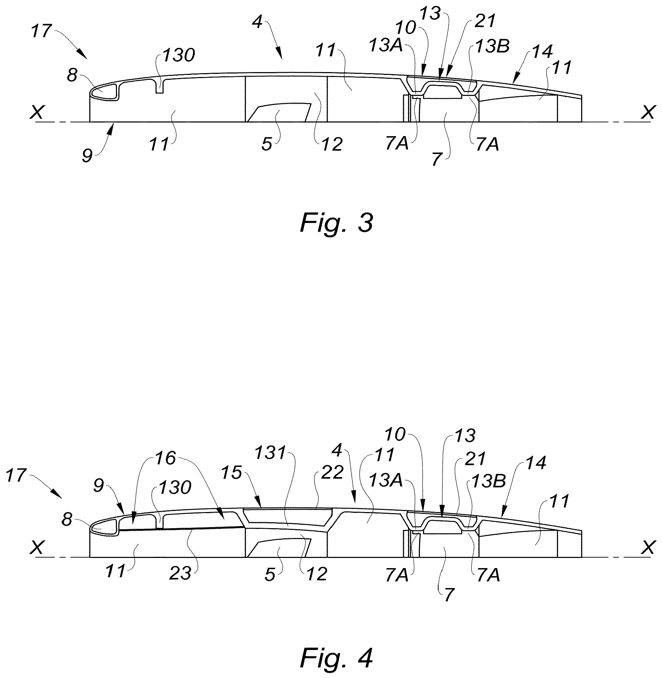

La figure 3 montre une vue en coupe d'une partie d'une nacelle 17 formée par un carter de soufflante 4 selon l'invention. La nacelle 17 est délimitée par une peau externe qui est en contact avec l'air extérieur à la nacelle. Le carter de soufflante 4, possède une unique paroi 14, qui forme au moins en partie la peau externe de la nacelle 17.

La paroi 14 comprend une rigidité suffisante pour assurer la fonction structurante du carter de soufflante 4 de la nacelle 17 et fixer des éléments au carter de soufflante 4.

Une lèvre d'entrée d'air 8 est composée d'un bord d'attaque, ce bord d'attaque pouvant être configuré pour recevoir un moyen de dégivrage. La lèvre d'entrée d'air 8 peut être monobloc ou rapportée à la nacelle 17. A la suite de cette lèvre d'entrée d'air 8, dans le sens de l'écoulement de l'air à travers la nacelle 17, est matérialisé la veine d'entrée d'air 9. Cette veine d'entrée d'air 9 comprend des éléments acoustiques tels que des panneaux acoustiques 11 de manière à limiter le bruit diffusé par l'ensemble propulsif. Le carter de soufflante 4 est confondu avec au moins une partie de la peau externe de la nacelle 17.

Ce carter de soufflante 4 entoure une soufflante 5 permettant d'assurer le flux d'air secondaire. Un revêtement abradable 12 tapisse la surface intérieure du carter de soufflante 4 au droit des aubes de soufflante de manière à rendre étanche le carter de soufflante 4 mais également prévenir les usures de la soufflante 5 en cas de contact entre les aubes de soufflante et le carter de soufflante 4.

Ce carter de soufflante 4 supporte également des éléments acoustiques tels que des panneaux acoustiques 11.

En effet, les panneaux acoustiques 11 sont fixés à la paroi interne du carter de soufflante 4, ou à au moins un capot amovible interne 23 de la nacelle 17 qui obture au moins une cavité interne 16 formée par le carter de soufflante 4, comme représenté sur la figure 4. Ces panneaux acoustiques 11 s'étendent au-delà des aubes de redressement de flux 7 jusqu'à une partie d'extrémité aval de la nacelle 17, et forment au moins en partie la peau interne de la veine d'air froid. Sur la plupart de la paroi interne du carter de soufflante 4, la profondeur disponible pour loger les panneaux acoustiques 11 est supérieure à celle disponible dans les nacelles de l'art antérieur.

Au droit de ces aubes de redressement de flux 7, un renfort 13 du carter de soufflante 4 de la nacelle 17 permet d'assurer la fixation au carter de soufflante 4 des aubes de redressement 7 ou de tout autre bras ayant une fonction structurante dans la liaison entre le carter de soufflante 4 et un moyeu fixe du turboréacteur. Les aubes de redressement de flux 7 peuvent former des bras structuraux ayant une rigidité suffisante pour assurer cette fonction structurante. De façon connue en soi, l'aubage qui comprend les aubes de redressement de flux 7 peut également comprendre des bras structuraux de section plus importante, ayant ou non un profil pour redresser le flux.

Ce moyen de renfort 13, qui dans l'exemple représenté a une section longitudinale en forme de W, forme une cavité externe 10 dirigée vers l'extérieur de la nacelle 17. La cavité externe 10 est au droit des aubes de redressement de flux 7.

Ce moyen de renfort 13 suit la paroi 14 du carter de soufflante 4 de la nacelle 17, et donc la peau externe de la nacelle 17, dans le sens de l'écoulement de l'air à travers la nacelle 17 jusqu'à arriver au niveau de la cavité externe 10. Autrement dit, le moyen de renfort 13 délimite une cavité externe 10 de section longitudinale sensiblement similaire à un W, la forme en W débouchant sur l'extérieur de la nacelle 17.

A l'issue de la délimitation de la cavité externe 10, le moyen de renfort 13 se confond à nouveau avec la peau externe de la nacelle 17, dans le sens de l'écoulement de l'air à travers la nacelle 17. Le moyen de renfort 13 a une fonction structurante pour la résistance du carter de soufflante 4 de la nacelle 17, et plus particulièrement sa paroi 14.

Cette cavité externe 10 permet d'accéder à une partie du renfort 13 qui accueille des moyens de fixation des aubes de redressement de flux 7 ou de tout autre bras ayant une fonction structurante. Le renfort 13 est en effet configuré pour la fixation du carter de soufflante 4 à des bras dont au moins une partie d'entre eux possède une rigidité suffisante pour assurer une liaison structurante entre le carter de soufflante 4 et d'autres parties structurantes du moteur. Ces bras de liaison structurante peuvent être en totalité constitués par les aubes de redressement de flux 7. La configuration du renfort 13 pour accueillir les moyens de fixation des bras 7 peut consister à prévoir des orifices traversant l'épaisseur du renfort 13, de façon à accueillir des boulons de fixation des bras. Les bras 7 peuvent comprendre à leurs sommets des zones de fixation 7A également munies d'orifices pour accueillir les boulons de fixation des bras.

Un capot 21, structurant ou non structurant, est configuré pour recouvrir la cavité externe 10 de manière amovible pour reconstituer la ligne aérodynamique externe de la nacelle 17 au niveau de cette cavité externe 10.

Lorsque le capot 21 amovible ne recouvre pas la cavité externe 10, un accès est permis par un utilisateur aux moyens de fixation des aubes de redressement de flux 7. Il n'est pas indispensable que le moyen de renfort 13 fasse saillie de façon significative vers l'intérieur de la nacelle.

De façon combinée avec une saillie à l'intérieur de la nacelle 17, le moyen de renfort 13 peut être réalisé par une surépaisseur locale de la paroi 14, qui peut former un bossage plus ou moins prononcé vers l'intérieur de la nacelle 17.

La figure 4 montre une vue en coupe d'une partie d'une nacelle 17 intégrant un carter de soufflante 4 selon une autre variante de l'invention. Cette nacelle 17 est également délimitée par une peau externe. De même que pour la nacelle de la figure 3, la paroi 14 comprend une rigidité suffisante pour assurer la fonction structurante du carter de soufflante 4 et pour y fixer des éléments de liaison à d'autres parties structurantes du moteur. Cette nacelle 17 est composée des mêmes éléments que la nacelle 17 de la figure 3.

Dans cette variante, un renfort 131 structural est introduit au droit des aubes de soufflante, ce renfort générant une cavité 15 dirigée vers l'extérieur de la nacelle 17. Cette cavité externe 15 a une forme de U en section longitudinale.

En effet, le renfort 131 du carter de soufflante 4 est orienté localement vers l'intérieur de la nacelle 17, afin de fixer le matériau abradable 12 sur le carter de soufflante 4. Cette forme de U du renfort 131, en section longitudinale, apporte une raideur supplémentaire au carter de soufflante 4, au niveau de la soufflante 5. Cette cavité externe 15 peut également accueillir un équipement de l'ensemble propulsif.

Un capot 22, structurant ou non structurant, est configuré pour recouvrir la cavité externe 15, comme le capot 21 de la cavité externe 10, de manière amovible, pour reconstituer la ligne aérodynamique externe de la nacelle 17 au niveau de la cavité externe 15 et de la cavité externe 10.

Le volume intérieur de chacune des cavités est alors accessible à un opérateur lorsque le capot 21, 22 correspondant est ôté.

En outre, au moins un capot amovible interne 23, recouvert par un panneau acoustique 11, est configuré pour recouvrir au moins une cavité 16, configurée pour recevoir des équipements de l'ensemble propulsif. Ce capot 23, et à fortiori l'au moins une cavité 16, est accessible par l'entrée d'air de la nacelle 17.

Cette invention permet d'agencer de manière optimisée une nacelle 17 afin d'en réduire la masse totale en mutualisant les fonctions de la nacelle 17 et du carter de soufflante 4. En effet, le carter de soufflante 4 et la nacelle 17 partagent une même paroi 14. De plus, les cavités externes 10, 15 sont intégrées dans le carter de soufflante 4 pour constituer des renforts structuraux et ménager des logements pouvant recevoir des équipements, et la ligne aérodynamique externe de la nacelle 17 est reconstituée par les capots amovibles 21, 22. Les renforts 13, 131 formant respectivement les cavités externes 10 et 15 permettent de fixer et/ou supporter des éléments comme les aubes de redressement de flux 7 et un revêtement abradable 12, mais également d'autres pièces tout en rigidifiant le carter de soufflante 4. Cet agencement de la nacelle 17 permet également d'augmenter les surfaces/volumes acoustiques traitées afin d'augmenter la capacité de réduction du bruit.

Bien entendu, toutes les simples modifications ou la combinaison d'éléments venant de différentes variantes de l'invention sont couvertes par la portée de la présente invention telle que revendiquée dans les revendications ci-jointes.

## Revendications

1. Carter de soufflante (4) de turboréacteur d'aéronef à double flux, **caractérisé en ce qu'**il comprend une unique paroi (14) formant au moins une partie d'une peau externe d'une nacelle (17), ladite paroi (14) comprenant au moins un renfort (13, 130, 131) de rigidification du carter de soufflante (4), au moins un dit renfort (13) étant constitué par une partie de la paroi (14) formant au moins une zone annulaire (13A, 13B) faisant saillie vers l'intérieur de la nacelle, ledit renfort (13) étant en outre configuré pour la fixation du carter de soufflante (4) à des bras (7) traversant une veine de flux secondaire du turboréacteur.

2. Carter de soufflante (4) selon la revendication 1, **caractérisé en ce que** l'au moins un renfort (13, 131) s'étend annulairement et présente un profil en section longitudinale sensiblement similaire à un W ou à un U.

3. Carter de soufflante (4) selon la revendication 2, **caractérisé en ce qu'**un renfort (131) présentant un profil en section longitudinale en forme de U est destiné à entourer la soufflante (5).

4. Carter de soufflante (4) selon la revendication 2, **caractérisé en ce que** ledit renfort (13) configuré pour la fixation du carter de soufflante (4) a des bras (7) présente un profil en section longitudinale en forme de W.

5. Carter de soufflante (4) selon l'une quelconque des revendications précédentes, **caractérisé en ce que** l'au moins un renfort (13, 131) forme au moins une cavité (10, 15) correspondante débouchant sur ladite peau externe (17).

6. Carter de soufflante (4) selon la revendication 5, **caractérisé en ce que** l'au moins une cavité (10, 15) est configurée pour être recouverte par un capot (21, 22), un panneau ou une trappe de fermeture.

7. Carter de soufflante (4) selon la revendication 6, **caractérisé en ce que** ledit capot (21, 22), le panneau ou la trappe de fermeture, est amovible.

8. Carter de soufflante (4) selon l'une quelconque des revendications 5 à 7, **caractérisé en ce que** ladite au moins une cavité (10, 15) est configurée pour recevoir au moins un équipement de l'ensemble propulsif.

9. Turboréacteur (3) d'aéronef, **caractérisé en ce qu'**il comprend un carter de soufflante (4) conforme à l'une quelconque des revendications précédentes.

10. Turboréacteur (3) d'aéronef selon la revendication 9, **caractérisé en ce que** les bras traversant la veine de flux secondaire du turboréacteur et auxquels ledit renfort (13) du carter de soufflante (4) est fixé comprennent des aubes de redressement de flux (7).

11. Nacelle formée par un carter de soufflante (4) selon l'une quelconque des revendications 1 à 8, **caractérisée en ce qu'**elle comporte des panneaux acoustiques (11) supportés par des surfaces internes de ladite unique paroi (14) du carter de soufflante (4), lesdits panneaux acoustiques (11) formant au moins une partie d'une peau interne de la nacelle (17) qui délimite extérieurement la veine de flux secondaire du turboréacteur.

## Patentansprüche

1. Gebläsegehäuse (4) eines Zweistromstrahl-Turbotriebwerks eines Flugzeugs, **dadurch gekennzeichnet, dass** es eine einzige Wand (14) umfasst, die mindestens einen Teil einer Außenhaut eines Maschinenhauses (17) bildet, wobei die Wand (14) mindestens eine Verstärkung (13, 130, 131) zur Versteifung des Gebläsegehäuses (4) umfasst, wobei mindestens eine Verstärkung (13) aus einem Teil der Wand (14) besteht, der mindestens einen ringförmigen Bereich (13A, 13B) bildet, der in das Innere des Maschinenhauses hineinragt, wobei die Verstärkung (13) ferner zum Befestigen des Gebläsegehäuses (4) an Armen (7) ausgebildet ist, die eine Sekundärstromkanal des Turbotriebwerks durchqueren.

2. Gebläsegehäuse (4) nach Anspruch 1, **dadurch gekennzeichnet, dass** sich die mindestens eine Verstärkung (13, 131) ringförmig erstreckt und ein im Wesentlichen W- oder U-ähnliches Längsschnittprofil aufweist.

3. Gebläsegehäuse (4) nach Anspruch 2, **dadurch gekennzeichnet, dass** eine Verstärkung (131) mit einem U-förmigen Längsschnittprofil das Gebläse (5) umschließen soll.

4. Gebläsegehäuse (4) nach Anspruch 2, **dadurch gekennzeichnet, dass** die Verstärkung (13), die zur Befestigung des Gebläsegehäuses (4) an Armen (7) ausgebildet ist, ein W-förmiges Längsschnittprofil aufweist.

5. Gebläsegehäuse (4) nach einem der vorhergehenden Ansprüche, **dadurch gekennzeichnet, dass** die mindestens eine Verstärkung (13, 131) mindestens einen entsprechenden Hohlraum (10, 15) bildet, der in die Außenhaut (17) mündet.

6. Gebläsegehäuse (4) nach Anspruch 5, **dadurch gekennzeichnet, dass** der mindestens eine Hohlraum (10, 15) so ausgebildet ist, dass er durch eine Haube (21, 22), eine Platte oder eine Verschlussklappe abgedeckt werden kann.

7. Gebläsegehäuse (4) nach Anspruch 6, **dadurch gekennzeichnet, dass** die Haube (21, 22), die Platte oder die Verschlussklappe abnehmbar ist.

8. Gebläsegehäuse (4) nach einem der Ansprüche 5 bis 7, **dadurch gekennzeichnet, dass** der mindestens eine Hohlraum (10, 15) so ausgebildet ist, dass er mindestens eine Anlage der Antriebseinheit aufnimmt.

9. Turbotriebwerk (3) eines Flugzeugs, **dadurch gekennzeichnet, dass** es ein Gebläsegehäuse (4) nach einem der vorhergehenden Ansprüche umfasst.

10. Turbotriebwerk (3) eines Flugzeugs nach Anspruch 9, **dadurch gekennzeichnet, dass** die Arme, die den Sekundärstromkanal des Turbotriebwerks durchqueren und an denen die Verstärkung (13) des Gebläsegehäuses (4) befestigt ist, Stromrichtschaufeln (7) umfassen.

11. Maschinenhaus, das durch ein Gebläsegehäuse (4) nach einem der Ansprüche 1 bis 8 gebildet wird, **dadurch gekennzeichnet, dass** es Akustikplatten (11) umfasst, die von Innenflächen der einzigen Wand (14) des Gebläsegehäuses (4) getragen werden, wobei die Akustikplatten (11) mindestens einen Teil einer Innenhaut des Maschinenhauses (17) bilden, die den Sekundärstromkanal des Turbotriebwerks außen begrenzt.

## Claims

1. A fan casing (4) of an aircraft bypass turbojet engine, **characterized in that** it comprises a single wall (14) forming at least one portion of an outer skin of a nacelle (17), said wall (14) comprising at least one reinforcement (13, 130, 131) for stiffening the fan casing (4), at least one said reinforcement (13) being constituted by a portion of the wall (14) forming at least one annular area (13A, 13B) projecting towards the inside of the nacelle, said reinforcement (13) being further configured for fastening the fan casing (4) to arms (7) passing through a secondary flow path of the turbojet engine.

2. The fan casing (4) according to claim 1, **characterized in that** the at least one reinforcement (13, 131) extends annularly and has a longitudinal cross-sectional profile substantially similar to a W or a U.

3. The fan casing (4) according to claim 2, **characterized in that** a reinforcement (131) having a U-shaped longitudinal cross-sectional profile is intended to surround the fan (5).

4. The fan casing (4) according to claim 2, **characterized in that** said reinforcement (13) configured for fastening the fan casing (4) to arms (7) has a W-shaped longitudinal cross-sectional profile.

5. The fan casing (4) according to any one of the preceding claims, **characterized in that** the at least one reinforcement (13, 131) forms at least one corresponding cavity (10, 15) opening onto said outer skin (17).

6. The fan casing (4) according to claim 5, **characterized in that** the at least one cavity (10, 15) is configured to be covered by a cowl (21, 22), a panel or a closing hatch.

7. The fan casing (4) according to claim 6, **characterized in that** said cowl (21, 22), the panel or the closing hatch is removable.

8. The fan casing (4) according to any one of claims 5 to 7, **characterized in that** said at least one cavity (10, 15) is configured to receive at least one equipment of the propulsion unit.

9. An aircraft turbojet engine (3), **characterized in that** it comprises a fan casing (4) according to any one of the preceding claims.

10. The aircraft turbojet engine (3) according to claim 9, **characterized in that** the arms passing through the secondary flow path of the turbojet engine and to which said reinforcement (13) of the fan casing (4) is fastened comprise flow straightening vanes (7).

11. A nacelle formed by a fan casing (4) according to any one of claims 1 to 8, **characterized in that** it includes acoustic panels (11) supported by inner surfaces of said single wall (14) of the fan casing (4), said acoustic panels (11) forming at least one portion of an inner skin of the nacelle (17) which externally delimits the secondary flow path of the turbojet engine.
